# EUROPÄISCHE PATENTSCHRIFT

(11) **EP 1 594 026 B1**
(45) Veröffentlichungstag und Bekanntmachung des Hinweises auf die Patenterteilung: **20.07.2011**
(21) Anmeldenummer: 05008200.7
(22) Anmeldetag: 14.04.2005
(51) Int. Cl.: G05G 9/047, B66F 9/24, B62D 6/02, B66F 9/075

(54) **Telelader, insbesondere Reachstacker, mit Lenkbefehleingabeeinrichtung**
Telehandler, in particular reachstacker, with steering control
Véhicule chargeur, en particulier reachstacker, avec dispositif de commande de direction

(30) Priorität: 04.05.2004 DE 202004007061 U
(43) Veröffentlichungstag der Anmeldung: 09.11.2005
(73) Patentinhaber: Liebherr-Werk Nenzing GmbH, 6710 Nenzing (AT)
(72) Erfinder: Sonderegger, Marco, 6805 Dornbirn (AT); Schneider Klaus, 88145 Hergatz (DE)
(74) Vertreter: Laufhütte, Dieter

(56) Entgegenhaltungen:
- EP-A2- 1 418 114
- EP-A2- 1 447 306
- DE-A1- 10 012 431
- GB-A- 2 325 211
- US-A- 5 181 173

## Beschreibung

Die Erfindung betrifft einen Telelader, insbesondere Reachstacker. Reachstacker sind gummibereifte, mit Dieselmotor und Fahrerkabine ausgestattete Fahrzeuge, ähnlich einem eingefahrenen Autokran.

Sie können Container transportieren und stapeln. Die bisher bekannten Reachstacker sind mit einem am Teleskoparm fest verbundenen Containerspreader ausgestattet, das heißt die Spreaderhöhenbewegung wird nur über den Teleskoparm vorgenommen. Bei bekannten Reachstackern ist die Fahrerkabine mit dem Fahrzeug im hinteren Teil fest oder beweglich auf dem Rahmen verbunden angeordnet, was dem Fahrer bei der vorhandenen Konstruktion immer eine gute Sicht auf den mit dem Teleskoparm festverbundenen Containerspreader erlaubt.

Bei Reachstackern ist es vorteilhaft, die Hinterräder als gelenkte Räder auszuführen. Das Lenksystem zum Lenken der Räder besteht aus einem Lenkrad und einer mechanischen Verbindung zwischen dem Lenkrad und dem den gelenkten Rädern der Hinterachse zugeordneten Lenkgestänge. Um eine für den Fahrer einfache Lenkung des teilweise insbesondere unter Last schweren Reachstackers zu ermöglichen, sind bereits elektronisch unterstützte Lenksysteme bekannt, also Lenksysteme, bei denen entsprechend dem Lenkeinschlag über Servomotoren die Lenkbewegung unterstützt wird. Dennoch bauen konventionelle Lenksysteme in Reachstackern, die von der Fahrerkabine zu den gelenkten Hinterrädern geführt werden, kompliziert und aufwendig.

In US 5 181 173 ist ein Lenksystem mit einer elektronischen Lenkungsteuerung für ein motorisiertes Fahrzeug beschrieben. Die Lenkübersetzung eines motorisierten Materialtransportfahrzeuges kann sich ändern in Reaktion auf die Fahrgeschwindigkeit durch eine elektronische Rückkopplungsschaltung. Die Lenkradumdrehungen von Anschlag zu Anschlag werden elektronisch eingestellt, um den Lenkwinkel entsprechend der Steigung der Fahrgeschwindigkeit abzuändern.

Aufgabe der vorliegenden Erfindung ist es, ein einfach bauendes und leicht bedienbares Lenksystem für Telelader, insbesondere Reachstacker, zu schaffen.

Erfindungsgemäß wird die Aufgabe durch die Merkmale des Anspruchs 1 gelöst. Demnach weist der Telelader, insbesondere Reachstacker, eine Lenkbefehleingabeeinrichtung, mindestens einen Aufnehmer zur Erfassung des Lenkwinkels sowie eine mit der Lenkbefehleingabeeinrichtung und mit dem mindestens einen Aufnehmer in Verbindung stehende Recheneinheit auf, die ein Vorgabesignal generiert, das an einen Lenkaktor weitergebbar ist.

Der Telelader bzw. Reachstacker weist demnach ein sogenanntes "Steer-by-Wire" Lenksystem auf. Bei diesem Lenksystem wird die Lenkbewegung von einer Lenkbefehleingabeeinrichtung elektronisch von der Lenkbefehleingabeeinrichtung zum Lenkgestänge übertragen, indem der vom Fahrer vorgegebene Lenkwinkelsollwert "per Draht" zunächst an eine Steuerelektronik übertragen wird. Die Steuerelektronik gibt dann "per Draht" den Stellbefehl an einen Aktuator oder Lenkaktor, der als hydraulischer oder elektrischer Stellmotor ausgeführt sein kann und die Lenkbewegung am Lenkgestänge erzeugt. Die Steuerelektronik verarbeitet dabei Signale von verschiedenen Sensoren. Die beiden wichtigsten Signale sind der Sollwert für den Lenkwinkel, der vom Fahrer an der Lenkbefehleingabeeinrichtung vorgegeben wird und der Istwert der Position des Lenkgestänges an den gelenkten Hinterrädern, der aus der Stellbewegung des Aktuators resultiert.

Weitere bevorzugte Ausgestaltungen ergeben sich aus dem sich an den Hauptanspruch anschließenden Unteransprüchen. Demnach kann die Lenkbefehleingabevorrichtung vorteilhaft ein Joystick sein. Grundsätzlich wären auch andere "elektronische" Lenkräder, wie eine Drehscheibe oder ähnliches als Lenkbefehleingabeeinrichtung denkbar.

Erfindungsgemäß weist die Recheneinheit Mittel auf mittels derer eine optimale Lenkgeschwindigkeit in Abhängigkeit von einem oder mehreren von erfassbaren Betriebsparametern bestimmbar ist. Derartige Betriebsparameter können beispielsweise die Fahrzeuggeschwindigkeit oder die Fahrzeug-gierrate sein.

Besonders vorteilhaft an einem Telelader, insbesondere Reachstacker der vorliegenden Erfindung, ist es gegenüber einem herkömmlichen, mechanischen Lenksystem, dass die Lenkübersetzung frei gewählt werden kann, beispielsweise als Funktion der Fahrzeuggeschwindigkeit. Auch kann die bereitgestellte Lenkkraftunterstützung frei programmiert werden. Als Zusatzfunktion könnte auch eine aktive dynamische Lenkwinkelkorrektur vorgesehen werden, die zur Erhöhung der Fahrstabilität dient.

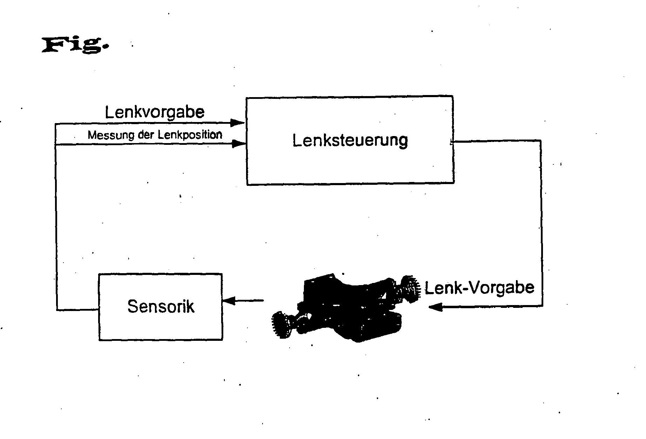

Weitere Merkmale, Einzelheiten und Vorteile der Erfindung werden anhand eines in der Zeichnung dargestellten Ausführungsbeispiels näher erläutert. Die einzige Figur zeigt schematisch eine Hinterachse eines ansonsten nicht näher dargestellten Reachstackers, der ein erfindungsgemäßes Lenksystem aufweist.

Mittels einer Sensorik, das heißt mindestens einem Aufnehmer, wird der Lenkwinkel der gelenkten Hinterräder eines Reachstackers erfasst. Die Sensorik kann aber auch andere Kenngrößen wie beispielsweise die Geschwindigkeit und die Fahrzeug-gierrate des Teleladers aufnehmen. Gleichzeitig wird über einen Joystick, der vorteilhaft als Lenkbefehleingabeeinrichtung dient, eine Lenkvorgabe, also ein entsprechender Sollwert vorgegeben. Sowohl der Sollwert wie auch der mittels der Sensorik aufgenommene Wert für die aktuelle Lenkposition sowie gegebenenfalls noch die weiteren Parameter werden einer entsprechenden Recheneinheit zugeführt, der sogenannten Lenksteuerung. Aus den erfassten Parametern wird in der Lenksteuerung der gewünschte Lenkeinschlag, die sogenannte Lenk-Vorgabe, ermittelt und als entsprechendes Signal ausgegeben, das an den Lenkaktor weitergebbar ist.

Die Einstellung des tatsächlichen Lenkeinschlages ist nur innerhalb eines zulässigen Bereichs möglich. Zur Ermittlung des tatsächlichen Lenkeinschlags sind ein oder mehrere Aufnehmer (redundante Ausführung) vorgesehen.

Mit der Eingrenzung des möglichen Bereichs des Lenkwinkels auf einen zulässigen Bereich wird die Lenkgeschwindigkeit und die Lenkbeschleunigung entsprechend angepasst, das heißt bei einer Verkleinerung des zulässigen Bereichs des Lenkwinkels ― z. B. bei Vergrößerung der Fahrgeschwindigkeit des Reachstackers ― werden Lenkgeschwindigkeit und Lenkbeschleunigung verringert. Somit wird erreicht, das bei hohen Geschwindigkeiten der Lenkeinschlag und die Lenkgeschwindigkeit nicht zu groß wird.

Somit kann durch maximale Vorgabe des Lenkwinkels durch den Fahrer aufgrund der Verwendung eines Steer-by-Wire Lenksystems der tatsächliche Lenkwinkel auf den maximal für die jeweilige Fahrbedingung zulässigen Lenkwinkel begrenzt werden.

## Patentansprüche

1. Telelader, insbesondere Reachstacker, mit einer Lenkbefehleingabeeinrichtung, mindestens einem Aufnehmer zur Erfassung des Lenkwinkels sowie mit einer mit der Lenkbefehleingabeeinrichtung und mit dem mindestens einen Aufnehmer in Verbindung stehenden Recheneinheit, die ein Vorgabesignal generiert, das an einen Lenkaktor weitergebbar ist,
**dadurch gekennzeichnet,**
**dass** die Recheneinheit ferner Mittel aufweist, mittels derer in Abhängigkeit von einem oder von mehreren erfassten Betriebsparametern der maximal zulässige Lenkwinkel begrenzbar und die Lenkgeschwindigkeit und die Lenkbeschleunigung reduzierbar sind.

2. Telelader nach Anspruch 1, **dadurch gekennzeichnet, dass** als Lenkbefehleingabevorrichtung ein Joystick dient.

## Claims

1. Telehandler, in particular a reach stacker, having a steering command input device, at least one sensor for sensing the steering angle, and having a computing unit which is connected to the steering command input device and to the at least one sensor and generates a preset signal that can be transmitted to a steering actuator,
**characterized**
**in that** the computing unit further has means, with which, depending on one or more operating parameters that are sensed, the maximum permissible steering angle can be limited and the steering speed and steering acceleration can be reduced.

2. Telehandler according to Claim 1, **characterized in that** a joystick serves as the steering command input device.

## Revendications

1. Véhicule chargeur, en particulier reachstacker, comprenant un dispositif de commande de direction, au moins un enregistreur pour la détection de l'angle de braquage et une unité de calcul qui est en liaison avec le dispositif de commande de direction et le au moins un enregistreur, laquelle génère un signal prédéfini, qui peut être transmis à un actionneur de direction,
**caractérisé en ce que**
l'unité de calcul présente également des moyens qui permettent de délimiter l'angle de braquage maximal autorisé en fonction d'un ou de plusieurs paramètres de service enregistrés et de réduire la vitesse de braquage et l'accélération de braquage.

2. Véhicule chargeur selon la revendication 1, **caractérisé en ce qu'**un joystick sert de dispositif de commande de direction.
